# EUROPÄISCHE PATENTSCHRIFT

(11) **EP 0 493 704 B1**
(45) Veröffentlichungstag und Bekanntmachung des Hinweises auf die Patenterteilung: **05.04.1995**
(21) Anmeldenummer: 91120978.1
(22) Anmeldetag: 06.12.1991
(51) Int. Cl.: H02K 5/132, H02K 9/19

(54) **Elektromotor**
Electric motor
Moteur électrique

(30) Priorität: 04.01.1991 DE 4100135
(43) Veröffentlichungstag der Anmeldung: 08.07.1992
(73) Patentinhaber: Loher Aktiengesellschaft, D-94099 Ruhstorf (DE)
(72) Erfinder: Herrmann, Anton, Dipl.-Ing., W-8390 Passau (DE)
(74) Vertreter: Zinnecker, Armin, Dipl.-Ing.

(56) Entgegenhaltungen:
- EP-A- 0 280 660
- DE-B- 1 149 448
- DE-C- 509 174
- FR-A- 1 022 783
- FR-A- 1 422 506

## Beschreibung

Die Erfindung betrifft einen Elektromotor mit einem Motorgehäuse, in dem sich ein den Motor umgebendes Motorfüllmedium befindet, und mit einem das Motorgehäuse umgebenden Druckgehäuse, in dem sich ein Gehäusefüllmedium befindet. Ein derartiger Motor ist aus der DE-C-509 174 bekannt.

Bei Antriebskonzepten für Anlagen unter Wasser, besonders in großen Wassertiefen, befindet sich der elektrische Antrieb, also der Elektromotor, zusammen mit der anzutreibenden Maschine in einem wasserdicht gekapselten Gehäuse. Dieses wasserdicht gekapselte Gehäuse ist so konzipiert, daß es auch dem Druck in großen Wassertiefen standhalten kann. Das wasserdicht gekapselte Gehäuse (Druckgehäuse) kann dabei je nach Antriebskonzept mit einem gasförmigen oder flüssigen Medium gefüllt sein. Dieses Füllmedium (Gehäusefüllmedium) umgibt den Motor, der wassergefüllt oder ölgefüllt ist. Über eine am Motor angebaute Druckausgleichsvorrichtung wird der Druck des Motorfüllmediums auf das Druckniveau des den Motor umgebenden Gehäusefüllmediums gesetzt. Der im Motorfüllmedium herrschende Druck ist also annähernd genauso groß wie der im Gehäusefüllmedium herrschende Druck.

Ein Elektromotor der eingangs angegebenen Art ist ebenfalls aus der EP 0 297 274 A2 bekannt.

Ein wesentlicher Nachteil bei dem vorbekannten Motor besteht darin, daß über das den Motor umgebende Füllmedium die Motorverlustwärme nicht ausreichend abgeführt werden kann.

Aus der EP 0 280 660 A2 ist ein Elektromotor bekannt, der ein Motorgehäuse besitzt, in dem ein Stator und ein Rotor angeordnet sind. In dem Motorgehäuse befindet sich ein Motorfüllmedium. An der Innenwandung des Motorgehäuses sind mehrere axial verlaufende Kühlkanäle vorgesehen. Ein das Motorgehäuse umgebendes Druckgehäuse ist allerdings nicht vorhanden. Die den Rotor tragende Welle ist als Hohlwelle ausgeführt, die an einer Seite offen ist. In der Hohlwelle sind Löcher vorgesehen. Das Motorfüllmedium durchströmt die Hohlwelle von ihrem Ende in axialer Richtung zu den Löchern. Das Motorfüllmedium durchströmt anschließend die Kühlkanäle in umgekehrter Richtung.

Aus der DE-PS 720 551 ist eine wasserdicht gekapselte elektrische Maschine bekannt, in der Wasserkühlkanäle vorgesehen sind, die das Maschinengehäuse umgeben und die durch einen Kühlmantel gebildet werden, der die Kühlkanäle allseitig umschließt. Der Kühlmantel bildet allerdings keinen Bestandteil der wasserdichten Kapselung der elektrischen Maschine oder des Maschinengehäuses. Die Wasserkühlkanäle sind nicht an der Innenwandung des Druckgehäuses angeordnet, sondern außerhalb des Druckgehäuses.

Die DE 82 04 396 U1 offenbart einen elektromotorischen Antrieb, bestehend aus einem Motor und einer den Motor dicht kapselnden Umhüllung. Im Motor, namentlich am oder im Ständer, ist ein Wärmetauscher angeordnet, der aus einem Kanalsystem bestehen kann. Ein das Motorgehäuse umgebendes Druckgehäuse ist nicht vorhanden.

Aus der DE-OS 16 13 014 ist ein gekapselter Elektromotor mit Flüssigkeitskühlung bekannt, bei dem der als Gehäuse dienende Ständer schraubenförmige, eine Kühlflüssigkeit aufnehmende Kanäle aufweist. Die Kanäle sind als mindestens zweigängige, von einer mit dem Gehäuse dicht verbundenen Hülse überdeckte Gewindenuten ausgebildet. Auch hier ist ein das Motorgehäuse umgebendes Druckgehäuse nicht vorhanden.

Die US 28 62 120 zeigt einen Elektromotor mit einem doppelwandigen, flüssigkeitsgekühlten Gehäuse, bei dem der Innenmantel exzentrisch im Außenmantel liegt. Der Innenmantel wird durch axiale Leitbleche gehalten, die den Kühlwasserstrom auf seinem Weg um das Gehäuse mehrmals von einer Stirnseite zur anderen umlenken. In den durch die Bleche gebildeten axialen Kanälen sind zusätzlich in Umfangsrichtung liegende Leitbleche angeordnet, die den Axialstrom wiederum mehrfach umlenken.

Hiervon ausgehend liegt der Erfindung die Aufgabe zugrunde, einen Elektromotor der eingangs angegebenen Art zu schaffen, bei dem die anfallende Verlustwärme ausreichend abgeführt werden kann. Insbesondere soll gewährleistet werden, daß in den oben beschriebenen Anlagen die anfallenden Wärmeverluste so abgeführt werden, daß der Motor sich nicht überhitzt.

Erfindungsgemäß wird diese Aufgabe durch die Kombination der Merkmale des Anspruchs 1 gelöst. An der Innenwandung des Druckgehäuses ist ein aus mindestens einem Kühlkanal bestehender Wärmetauscher angeordnet, der von dem Motorfüllmedium als Kühlmedium durchströmt wird. Das Kühlmedium wird axial durch den Motor geleitet. Die anfallende Verlustwärme kann über den Wärmetauscher an die Druckgehäusewand abgegeben werden und von dort an das das Druckgehäuse umgebende Medium.

Vorteilhafte Weiterbildungen sind in den Unteransprüchen beschrieben.

Vorzugsweise verläuft der Kühlkanal spiralförmig über die Länge des Druckgehäuses.

Eine weitere vorteilhafte Weiterbildung ist dadurch gekennzeichnet, daß das Kühlmedium durch die Ständernut und/oder den Motorspalt und/oder durch Kanäle in den Zähnen und/oder im Rücken des Blechpakets axial durch den Motor geleitet wird.

Die Kühlmediumeinlaßöffnung einerseits und die Kühlmediumauslaßöffnung andererseits können sich am Motor auf entgegengesetzten Motorseiten (AS und BS) befinden.

Der Kühlmediumstrom kann durch den Motor selbst oder durch eine Kühlkreislaufpumpe erzwungen werden. Sofern der Motor selbst als Kühlmediumpumpe fungiert, kann dies durch ein auf die Motorwelle gesetztes Quirlrad bewerkstelligt werden. Statt dessen oder zusätzlich kann die Motorwelle zur Erzeugung des Kühlmediumstroms als Hohlwelle ausgebildet sein, die auf der einen Seite über eine axiale Kühlmediumeinlaßöffnung und auf der anderen Seite über radial ausgeführte Kühlmediumauslaßöffnungen verfügt. Die Hohlwelle ist somit als Zentrifugalpumpe ausgebildet.

Bei vertikaler Motoranordnung wird die Kühlmediumumwälzung durch die natürliche Konvektion unterstützt, wenn der Kühlmittelaustritt am Motor auf der unten liegenden Motorgehäuseseite angebracht ist.

Vorzugsweise sind der Wärmetauscher bzw. der Kühlkanal und gegebenenfalls dessen Zu- und Ableitung dünnwandig ausgebildet. Dies wird dadurch ermöglicht, daß das Kühlmedium über die Motormembran dem Druck im Druckgehäuse (Druckkapselgehäuse) angeglichen wird. Im Kühlmedium einerseits und im Gehäusefüllmedium andererseits herrscht also annähernd derselbe Druck.

Nach der Erfindung ist es möglich, den Motorinnendruck, unbeeinflußt durch das Kühlsystem, auf dem Druckniveau des das Motorgehäuse umgebenden Mediums (Gehäusefüllmedium) zu halten. Die Motorgehäusekonstruktion und die Wellenabdichtung des Antriebs bleiben somit unproblematisch. Das Kühlkonzept kann in das Antriebskonzept integriert werden, so daß nur ein äußerst geringer technischer Zusatzaufwand erforderlich ist.

Die Erfindung betrifft weiterhin ein Förderaggregat, bestehend aus einem erfindungsgemäßen Motor und einer anzutreibenden Maschine, insbesondere einer Pumpe. Eine vorteilhafte Weiterbildung eines derartigen Förderaggregats ist dadurch gekennzeichnet, daß der Motor und die anzutreibende Maschine in einem wasserdicht gekapselten Gehäuse untergebracht sind.

Ein Ausführungsbeispiel der Erfindung wird nachstehend anhand der beigefügten Zeichnung im einzelnen erläutert. In der Zeichnung zeigt
- Fig. 1:: einen Motor im Längsschnitt und
- Fig. 2:: einen Teilquerschnitt durch den Motor gem. Fig. 1.

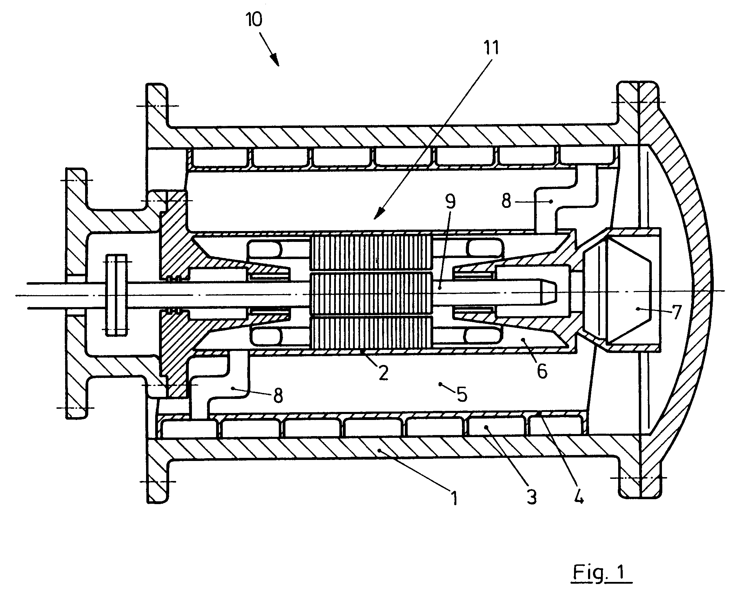

Der in der Fig. 1 insgesamt mit 10 bezeichnete Motor besteht aus einem Motorgehäuse 2, in dem sich ein den Elektromotor 11 umgebendes Motorfüllmedium 6 befindet, und einem das Motorgehäuse 2 umgebenden Druckgehäuse 1, in dem sich ein Gehäusefüllmedium 5 befindet. Über eine am Elektromotor 11 angebaute Druckausgleichsvorrichtung 7 wird der Druck des Motorfüllmediums 6 auf das Druckniveau des den Elektromotor 11 umgebenden Gehäusefüllmediums 5 gesetzt. An der Innenwandung des den Elektromotor 11 umgebenden Druckgehäuses 1 ist ein Wärmetauscher angebracht, der aus einem Kühlkanal 3 besteht, der über die Länge des zylinderförmigen Druckgehäuses 1 spiralförmig verläuft. Im dargestellten Beispiel sind sieben Spiralwindungen vorhanden. Als den Wärmetauscher 3 durchströmendes Kühlmedium dient das Motorfüllmedium 6. Es wird vom Elektromotor 11 über eine Zuleitung 8 in den spiralförmigen Kühlkanal 3 eingeleitet und am anderen Ende des spiralförmigen Kühlkanals 3 über eine Ableitung 8 wieder dem Elektromotor 11 zugeführt. Die Wärmeabgabe erfolgt im Kühlkanal 3: Wärmeleitung durch die Druckgehäusewand 1 und Wärmeübergang von der Druckgehäusewand 1 an das das Druckgehäuse 1 umgebende Medium. Die Kühlmitteleinlaß- und Auslaßöffnungen 8 am Motor befinden sich jeweils entgegengesetzt auf den Motorseiten AS und BS.

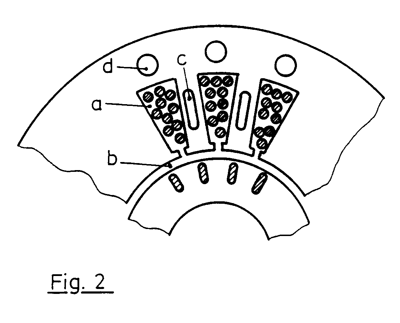

Wie aus Fig. 2 ersichtlich, überstreicht der Kühlmittelfluß die Entstehungsorte der Wärme, indem er durch die Ständernut a, den Motorspalt b und durch Kanäle in den Zähnen c und im Rücken d des Blechpakets axial durch den Elektromotor 11 geleitet wird.

Der Kühlmittelstrom wird durch den Motor selbst oder eine Kühlkreislaufpumpe erzwungen. Sofern der Motor selbst als Pumpe fungiert, kann dies entweder durch ein auf die Welle 9 gesetztes Quirlrad bewerkstelltigt werden oder (bzw. zusätzlich) durch eine Hohlwelle, die auf der einen Seite über eine axiale Kühlmitteleinlaßöffnung und auf der anderen Seite über radial ausgeführte Kühlmittelauslaßöffnungen verfügt und somit als Zentrifugalpumpe ausgebildet ist.

Bei vertikaler Motoranordnung wird die Kühlmittelumwälzung durch die natürliche Konvektion unterstützt, wenn der Kühlmittelaustritt am Motor auf der unten liegenden Motorgehäuseseite angebracht ist.

Der Kühlkanal 3 sowie dessen Zu- und Ableitung 8 können dünnwandig 4 konzipiert werden, da das Kühlmedium über die Motormembran dem Druck im Druckkapselgehäuse angeglichen wird.

## Patentansprüche

1. Elektromotor mit
einem Motorgehäuse (2), in dem sich ein den Motor (11) umgebendes Motorfüllmedium (6) befindet,
und einem das Motorgehäuse (2) umgebenden Druckgehäuse (1), in dem sich ein Gehäusefüllmedium (5) befindet,
dadurch gekennzeichnet, daß
an der Innenwandung (1) des Druckgehäuses ein aus mindestens einem Kühlkanal (3) bestehender Wärmetauscher angeordnet ist, der von dem Motorfüllmedium (6) als Kühlmedium durchströmt wird
und wobei das Kühlmedium axial durch den Motor (11) geleitet wird.

2. Motor nach Anspruch 1, wobei der Kühlkanal (3) über die Länge des Druckgehäuses (1) spiralförmig verläuft.

3. Motor nach Anspruch 1 oder 2, dadurch gekennzeichnet, daß das Kühlmedium durch die Ständernut (a) und/oder den Motorspalt (b) und/oder durch Kanäle (c, d) in den Zähnen und/oder im Rücken des Blechpakets axial durch den Motor (11) geleitet wird.

4. Motor nach einem der vorhergehenden Ansprüche, dadurch gekennzeichnet, daß sich die Kühlmediumeinlaß- und -auslaßöffnung (8) am Motor auf entgegengesetzten Motorseiten (AS und BS) befinden.

5. Motor nach einem der vorhergehenden Ansprüche, dadurch gekennzeichnet, daß der Kühlmediumstrom durch eine Kühlkreislaufpumpe erzwungen wird.

6. Motor nach einem der vorhergehenden Ansprüche, dadurch gekennzeichnet, daß der Kühlmediumstrom durch den Motor selbst erzwungen wird.

7. Motor nach Anspruch 6, dadurch gekennzeichnet, daß der Kühlmediumstrom durch ein auf die Motorwelle (9) gesetztes Quirlrad erzeugt wird.

8. Motor nach Anspruch 6 oder 7, dadurch gekennzeichnet, daß die Motorwelle (9) zur Erzeugung des Kühlmediumstroms als Hohlwelle ausgebildet ist, die auf der einen Seite über eine axiale Kühlmediumeinlaßöffnung und auf der anderen Seite über radial ausgeführte Kühlauslaßöffnungen verfügt.

9. Motor nach einem der vorhergehenden Ansprüche, dadurch gekennzeichnet, daß der Kühlmediumaustritt bei vertikaler Motoranordnung an der unten liegenden Motorgehäuseseite angeordnet ist.

10. Motor nach einem der vorhergehenden Ansprüche, dadurch gekennzeichnet, daß der Wärmetauscher bzw. Kühlkanal (3) und gegebenenfalls dessen Zu- und Ableitung (8) dünnwandig ausgebildet sind.

11. Förderaggregat, bestehend aus einem Motor nach einem der Ansprüche 1-10 und einer anzutreibenden Maschine, insbesondere einer Pumpe.

12. Förderaggregat nach Anspruch 11, dadurch gekennzeichnet, daß der Motor und die anzutreibende Maschine in einem wasserdicht gekapselten Gehäuse untergebracht sind.

## Claims

1. An electric motor with
a motor housing (2) wherein there is located a motor filling medium (6) which surrounds the motor (11)
and a pressure housing (1) wherein there is located a housing filling medium (5) which surrounds the motor housing (2)
characterized in that
on the inner side (1) of the pressure housing there is arranged a heat exchanger consisting of at least one cooling duct (3) which is traversed by the motor filling medium (6) as the cooling medium
and in which arrangement the cooling medium is passed axially through the motor (11).

2. A motor according to claim 1, wherein the cooling duct (3) extends in a helical configuration over the length of the pressure housing (1).

3. A motor according to claim 1 or 2, characterized in that the cooling medium is passed axially through the motor (11) through the stator groove (a) and/ or the motor gap (b) and/or through ducts ((c, d) in the teeth and/or at the back of the armature laminations.

4. A motor according to one of the preceding claims, characterized in that the inlet and outlet openings (8) for the cooling medium are located on the motor on opposite motor sides (AS and BS).

5. A motor according to one of the preceding claims, characterized in that the flow of the cooling medium is forced by a circulating pump for the cooling medium.

6. A motor according to one of the preceding claims, characterized in that the flow of the cooling medium is forced by the motor itself.

7. A motor according to claim 6, characterized in that the flow of the cooling medium is generated by an agitator wheel placed on the motor shaft (9).

8. A motor according to claim 6 or 7, characterized in that for generating the flow of the cooling medium, the motor shaft (9) is designed as a hollow shaft which has on one side an axial inlet opening for the cooling medium and on the other side, radially designed outlet openings for the cooling medium.

9. A motor according to one of the preceding claims, characterized in that with a vertical arrangement of the motor, the outlet for the cooling medium is arranged at the side of the motor housing lying at the bottom (10).

10. A motor according to one of the preceding claims, characterized in that the heat exchanger or the cooling duct (3) and, if required, its feeder and discharge lines (8) are given a thin-walled design,

11. A delivery unit consisting of a motor according to one of claims 1 to 10, and a machine to be driven, in particular, a pump.

12. A delivery unit according to claim 11, characterized in that the motor and the machine to be driven are accommodated in a watertight sealed housing.

## Revendications

1. Moteur électrique comportant
une carcasse de moteur (2) dans laquel se trouve un moyen de remplissage du moteur (6) entourant le moteur (11)
et un carter de pression (1) entourant la carcasse de moteur (2) dans lequel se trouve un moyen de remplissage du carter (5),
caractérisé en ce que
sur la paroi intérieure (1) du carter de pression est disposé un échangeur de chaleur consistant en au moins un canal de refroidissement (3), qui est traversé du moyen de remplissage du moteur (6) comme moyen de refroidissement
et dans lequel le moyen de refroidissement est dirigé axialement à travers le moteur (11).

2. Moteur selon la revendication 1, dans lequel le canal de refroidissement (3) s'étend en forme de spirale sur la longueur du carter de pression (1).

3. Moteur selon les revendications 1 ou 2, caractérisé en ce que le moyen de refroidissement est dirigé à travers la rainure du stator (a) et/ou la fente du moteur (b) et/ou les canaux (c, d) dans les dents et/ou dans le dos du paquet du tôles, axialement à travers le moteur.

4. Moteur selon l'une quelconque des revendications précédentes, caractérisé en ce que les orifices d'entrée et de sortie du moyen de refroidissement (8) se trouvent sur des côtés opposés (AS et BS) du moteur.

5. Moteur selon l'une quelconque des revendications précédentes, caractérisé en ce que le flux du moyen de refroidissement est forcé par une pompe du circuit de refroidissement.

6. Moteur selon l'une quelconques des revendications précédentes, caractérisé en ce que le flux du moyen de refroidissement est forcé par le moteur lui-même.

7. Moteur selon la revendication 6, caractérisé en ce que le flux du moyen de refroidissement est produit par une roue de brassage montée sur l'arbre du moteur (9).

8. Moteur selon les revendications 6 ou 7, caractérisé en ce que l'arbre du moteur (9) est formé comme arbre creux pour produire le flux du moyen de refroidissement, arbre creux qui d'un côté présente un orifice axial d'amenée du moyen de refroidissement et de l'autre côté des orifices de sortie du moyen de refroidissement formés en sens radial.

9. Moteur selon l'une quelconque des revendications précédentes, caractérisé en ce que la sortie du moyen de refroidissement est disposée sur le côté inférieur de la carcasse du moteur lorsque le moteur est diposé verticalement.

10. Moteur selon l'une quelconque des revendications précédentes, caractérisé en ce que l'échangeur de chaleur ou le canal de refroidissement (3) et le cas échéant la conduite d'amenée et d'évacuation (8) de celui-ci sont formés avec des parois minces.

11. Dispositif transporteur consistant en un moteur selon l'une quelconque des revendications 1 à 10 et une machine entraînée, notamment une pompe.

12. Dispositif transporteur selon la revendication 11, caractérisé en ce que le moteur et la machine à entraîner sont logés dans un carter encapsulé étanche à l'eau.
